# EUROPEAN PATENT APPLICATION

(11) **EP 3 176 709 A1**
(43) Date of publication of application: **07.06.2017**
(21) Application number: 16176268.7
(22) Date of filing: 24.06.2016
(51) Int. Cl.: G06F 17/30, G06K 9/00

(54) **VIDEO CATEGORIZATION METHOD AND APPARATUS, COMPUTER PROGRAM AND RECORDING MEDIUM**

(30) Priority: 01.12.2015 CN 201510867436
(71) Applicant: Xiaomi Inc., Beijing 100085 (CN)
(72) Inventor: CHEN, Zhijun, Haidian District 100085 (CN); HOU, Wendi, Haidian District 100085 (CN); LONG, Fei, Haidian District 100085 (CN)
(74) Representative: Nevett, Duncan

(57) **Abstract**

The present invention relates to a video categorization method and apparatus, a computer program and a recording medium. The method comprises: acquiring a key frame, which contains a face, in a video; acquiring a face feature in the key frame; acquiring one or more face features corresponding to one or more picture categories; determining, according to the face feature in the key frame and the one or more face features corresponding to the one or more picture categories, a picture category to which the video belongs; and assigning the video to the picture category to which the video belongs. With the above technical solution, a video may be smartly and automatically classified into a picture category corresponding to a user appearing in the video, thereby not only eliminating the need for manual categorization by the user but also improving the accuracy of categorization.

## Description

### TECHNICAL FIELD

The present invention relates to the technical field of multimedia clustering, and more particularly, to a video categorization method and apparatus, a computer program and a recording medium.

### BACKGROUND ART

At present, users may capture multimedia data such as videos and photos by using media capturing apparatus. For photos, there is face clustering technology available currently, by which photos where the same person appears may be categorized into a photo album corresponding to the person. However, no technology is available now for performing face clustering for videos and photos in which the same person appears. A user has to manually categorize the videos. This is of low intelligence and low efficiency.

### SUMMARY OF THE INVENTION

Embodiments of the present invention provide a video categorization method and apparatus, a computer program and a recording medium as follows.

According to a first aspect of embodiments of the present invention, a video categorization method is provided. The method comprises:
acquiring a key frame, which contains a face, in a video;
acquiring a face feature in the key frame;
acquiring one or more face features corresponding to one or more picture categories;
determining, according to the face feature in the key frame and the face features corresponding to the picture categories, a picture category to which the video belongs or to which the video should be associated with; and
assigning the video to said picture category.

In one embodiment, the acquiring the key frame which contains a face in the video comprises:
acquiring, from the video, at least one video frame containing one or more faces;
determining a face parameter for each of the at least one video frame, the face parameter comprising either or both of a face quantity and a face location; and
determining the key frame in the video according to the face parameter for each of the at least one video frame.

In one embodiment, the determining the key frame in the video according to the face parameter for each of the at least one video frame comprises:
determining, according to the face parameter for each of the at least one video frame, one or more non-duplicate video frames each having a face parameter that does not reoccur for other video frames; and
determining at least one of the non-duplicate video frames as the key frame.

In one embodiment, the determining the key frame in the video according to the face parameter for each of the at least one video frame comprises:
determining, according to the face parameter for each of the at least one video frame, at least one group of duplicate video frames having the same face parameter, each group of duplicate video frames comprising at least two video frames, a difference between capturing times of a latest captured video frame and an earliest captured video frame in each group of duplicate video frames being less than or equal to a predetermined time duration, all the video frames in each group of duplicate video frames having the same face parameter; and
determining any one of each group of duplicate video frames as the key frame.

In one embodiment, the determining, according to the face feature in the key frame and the one or more face features corresponding to the one or more picture categories, the picture category to which the video belongs comprises:
when there are at least two videos, determining a face feature in a key frame in each of the videos; performing face clustering for the at least two videos according to the face feature in the key frame in each of the videos, to obtain at least one video category; and determining, according to a face feature corresponding to each respective one of the at least one video category and the one or more face features corresponding to the one or more picture categories, a picture category which corresponds to the same face feature as the respective one of the at least one video category; and
the assigning the video to the picture category to which the video belongs comprises:
   assigning each video in each respective one of the at least one video category to the picture category which corresponds to the same face feature as the respective one of the at least one video category.

In one embodiment, the determining, according to the face feature in the key frame and the one or more face features corresponding to the one or more picture categories, the picture category to which the video belongs comprises:
determining, from the one or more picture categories which correspond to the one or more face features, a picture category matching the face feature in the key frame; and
determining the matching picture category as the picture category to which the video belongs.

In one embodiment, the method further comprises:
acquiring a capturing time and a capturing location of the video;
determining a reference picture which has the same capturing time and capturing location as the video; and
assigning the video to a picture category to which the reference picture belongs.

According to a second aspect of embodiments of the present invention, a video categorization apparatus is provided. The apparatus comprises:
a first acquiring module configured to acquire a key frame, which contains a face, in a video;
a second acquiring module configured to acquire a face feature in the key frame acquired by the first acquiring module;
a third acquiring module configured to acquire one or more face features corresponding to one or more picture categories;
a first determining module configured to determine, according to the face feature in the key frame acquired by the second acquiring module and the one or more face features corresponding to the one or more picture categories acquired by the third acquiring module, a picture category to which the video belongs; and
a first assigning module configured to assign the video to the picture category, to which the video belongs, determined by the first determining module.

In one embodiment, the first acquiring module comprises:
an acquiring submodule configured to acquire from the video at least one video frame containing one or more faces;
a first determining submodule configured to determine a face parameter for each of the at least one video frame acquired by the acquiring submodule, the face parameter comprising either or both of a face quantity and a face location; and
a second determining submodule configured to determine the key frame in the video according to the face parameter for each of the at least one video frame.

In one embodiment, the second determining submodule is further configured to determine, according to the face parameter for each of the at least one video frame, one or more non-duplicate video frames each having a face parameter that does not reoccur for other video frames and to determine at least one of the non-duplicate video frames as the key frame.

In one embodiment, the second determining submodule is further configured to:
determine, according to the face parameter for each of the at least one video frame, at least one group of duplicate video frames having the same face parameter, each group of duplicate video frames comprising at least two video frames, a difference between capturing times of a latest captured video frame and an earliest captured video frame in each group of duplicate video frames being less than or equal to a predetermined time duration, all the video frames in each group of duplicate video frames having the same face parameter; and
determine any one of each group of duplicate video frames as the key frame.

In one embodiment, the first determining module comprises a third determining submodule configured to:
determine, when there are at least two videos, a face feature in a key frame in each of the videos;
perform face clustering for the at least two videos according to the face feature in the key frame in each of the videos, to obtain at least one video category; and
determine, according to a face feature corresponding to each respective one of the at least one video category and the face features corresponding to the picture categories, a picture category which corresponds to the same face feature as the respective one of the at least one video category, and
the first assigning module comprises a first assigning submodule configured to assign each video in each respective one of the at least one video category determined by the third determining submodule to the picture category which corresponds to the same face feature as the respective one of the at least one video category.

In one embodiment, the first determining module comprises:
a fourth determining submodule configured to determine, from the one or more picture categories which corresponds to the one or more face features, a picture category matching the face feature in the key frame; and
a second assigning submodule configured to determine the matching picture category determined by the fourth determining submodule as the picture category to which the video belongs.

In one embodiment, the apparatus further comprises:
a fourth acquiring module configured to acquire a capturing time and a capturing location of the video;
a second determining module configured to determine a reference picture which has the same capturing time and capturing location as the video acquired by the fourth acquiring module; and
a second assigning module configured to assign the video to a picture category to which the reference picture determined by the second determining module belongs.

According to a third aspect of embodiments of the present invention, a video categorization apparatus is provided. The apparatus comprises:
a processor; and
a memory for storing instructions executable by the processor,
wherein the processor is configured to:
acquire a key frame, which contains a face, in a video;
acquire a face feature in the key frame;
acquire one or more face features corresponding to one or more picture categories;
determine, according to the face feature in the key frame and the one or more face features corresponding to the one or more picture categories, a picture category to which the video belongs; and
assign the video to the picture category to which the video belongs.

In one particular embodiment, the steps of the video categorization method are determined by computer program instructions.

Consequently, according to a fourth aspect, the invention is also directed to a computer program for executing the steps of a video categorization method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present invention may achieve the following beneficial effects.

In the above technical solutions, a video may be smartly and automatically classified into a picture category corresponding to a user appearing in the video, thereby not only eliminating the need for manual categorization by the user and but also improving the accuracy of categorization.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart illustrating a video categorization method according to an exemplary embodiment of the present invention;
Fig. 2 is a flowchart illustrating another video categorization method according to an exemplary embodiment of the present invention;
Fig. 3 is a flowchart illustrating still another video categorization method according to an exemplary embodiment of the present invention;
Fig. 4 is a block diagram illustrating a video categorization apparatus according to an exemplary embodiment of the present invention;
Fig. 5 is a block diagram illustrating another video categorization apparatus according to an exemplary embodiment of the present invention;
Fig. 6 is a block diagram illustrating still another video categorization apparatus according to an exemplary embodiment of the present invention;
Fig. 7 is a block diagram illustrating yet another video categorization apparatus according to an exemplary embodiment of the present invention;
Fig. 8 is a block diagram illustrating a further video categorization apparatus according to an exemplary embodiment of the present invention; and
Fig. 9 is a block diagram illustrating a video categorization apparatus according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

Embodiments of the present invention provide a video categorization technology. With this technology, a video may be smartly and automatically categorized into a picture category of a user appearing in the video, thereby not only eliminating the need for manual categorization by the user but also improving the accuracy of the categorization.

Prior to describing the method according to the embodiments of the present invention, picture categories and a generation method thereof are described here. One picture category corresponds to one face. Pictures in each picture category contain the same face. In other words, one picture category corresponds to one person. Therefore, each picture category comprises a group of pictures having the same face feature. The embodiments of the present invention may employ the following face clustering method to generate picture categories. However, the present invention is not limited thereto.

Typically, in the face clustering method, full-quantity clustering is used during an initial performance of clustering for initialization and incremental clustering is used for subsequent performances of clustering. The face clustering method may comprise the following steps A1 to A5.
In step A1, N face features included respectively in N pictures are obtained, wherein N is greater than or equal to 2. At the beginning of the clustering, each face is taken as a category. Thus, N categories are obtained initially.
In step A2, distances between each two categories among the N categories are calculated. A distance between two categories is a distance between faces belonging respectively to the categories.
In step A3, a distance threshold θ is predetermined; when a distance between two categories is less than θ, it is considered that the two categories correspond to the same person; and the two categories are combined into a new category in this iteration.
In step A4, step A3 is repeatedly executed to perform an iterative process, which is terminated until no new category is generated in an iteration.
In step A5, a total of M categories are generated at last, wherein each category comprises at least one face and one category represents one person.

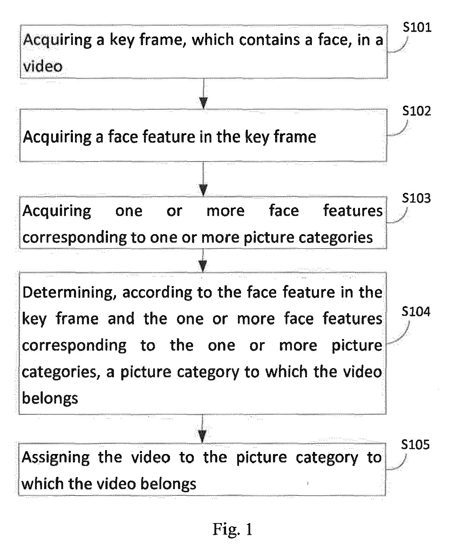

Fig. 1 is a flowchart illustrating a video categorization method according to an embodiment of the present invention. The method may be performed by an application program for managing multimedia files. In this case, the video, picture categories and pictures belong to a picture category involved in the method refer to the video, picture categories and pictures in a picture category stored in a device where the application program is installed. In addition, the method may also be performed by an electronic device where multimedia files are stored. In this case, the video, picture categories and pictures in a picture category involved in the method refer to the video, picture categories and pictures in a picture category stored in the electronic device. The application program or the electronic device may trigger the method automatically on a periodic basis, upon receipt of a user's instruction, or automatically when it is detected that at least one new video is generated. There may be many choices of the timing for triggering the method, including but not limited to the above described ones. By doing so, the ultimate goal is to smartly categorize the video and save manpower by using the method. As illustrated in Fig. 1, the method comprises steps S101 to S105.

In step S101, a key frame, which contains a face, in a video is acquired. In other words, a first frame which contains a face is aquired from the video.

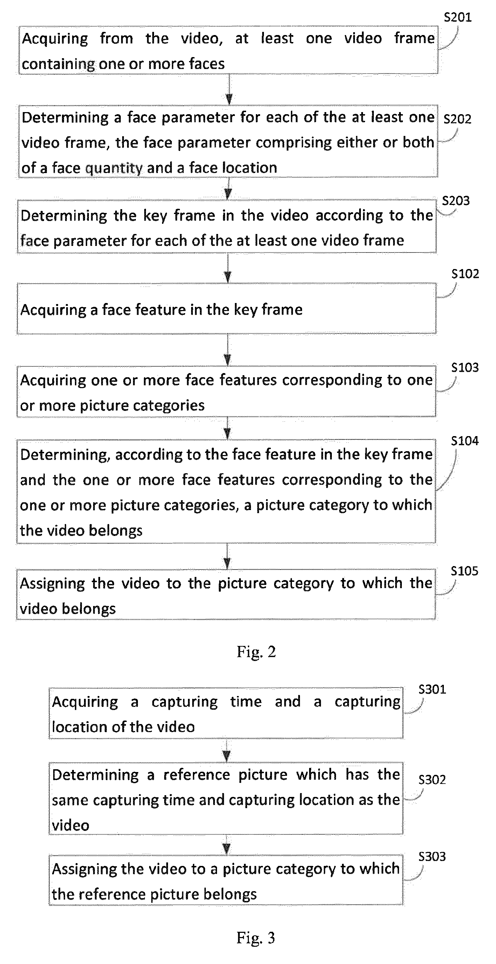

In one embodiment, any one or more of video frames each containing a face may be selected from the video as key frames. Alternatively, a key frame may be acquired in the manner as illustrated in Fig. 2. As shown in Fig. 2, step S101 may be implemented as the following steps S201 to S203.
In step S201, at least one video frame containing one or more faces is acquired from the video.
In step S202, a face parameter for each of the at least one video frame is determined, wherein the face parameter comprises either or both of a face quantity and a face location.
In step S203, the key frame in the video is determined according to the face parameter for each of the at least one video frame.
Step S203 may be implemented in any one or two of the following manners.

Manner 1: determining, according to the face parameter for each of the at least one video frame, one or more non-duplicate video frames each having a face parameter that does not reoccur for other video frames; and determining at least one of the non-duplicate video frames as the key frame.

To be specific, a non-duplicate video frame refers to a video frame which has a face parameter different from that of any other video frame, namely, which contains a face that does not reappear in other video frames. Therefore, any one or more non-duplicate video frames may be selected as key frames.

Manner 2: determining, according to the face parameter for each of the at least one video frame, at least one group of duplicate video frames having the same face parameter, each group of duplicate video frames comprising at least two video frames, a difference between capturing times of a latest captured video frame and an earliest captured video frame in each group of duplicate video frames being less than or equal to a predetermined time duration, all the video frames in each group of duplicate video frames having the same face parameter; and determining any one of each group of duplicate video frames as the key frame.

The predetermined time duration may be configured in advance. Since the same image in the video typically does not last for a long time, the predetermined time duration shall not be too long. Considering that video is displayed at 24 frames per second, the predetermined time duration may be controlled to be within N/24 second, wherein N is greater than or equal to 1 and less than or equal to 24 (or 36, or another numerical value, which may be defined as needed). The shorter the predetermined time duration, the more accurate the selected key frame. Thus, video frames in each group of duplicate video frames contain the same face, i.e., the same face appears in the plurality of video frames. Therefore, any video frame in each group of duplicate video frames may be selected as a key frame, thereby eliminating the duplication and improving the efficiency of selecting the key frame.

The above manner 1 and manner 2 may be applied separately or in combination.
In step S102, a face feature in the key frame is acquired. That is, the key frame may be analysed to determine if a feature of a face is present in the key fame, and if a feature of a face is identified, the face feature may be acquired from the key frame.
In step S103, one or more face features corresponding to one or more picture categories are acquired. A picture category may be a directory for grouping a particular plurality of pictures that are each associated with one or more common face features. For example, a picture category may be an electronically stored album containing a plurality of pictures that have each been determined to be associated with one or more common face features.
In step S104, a picture category to which the video belongs is determined according to the face feature in the key frame and the one or more face features corresponding to the one or more picture categories. That is, it may be determined if the video should be categorised in or with one or more existing picture categories, such as a picture category associated with the face feature that is present in the key frame. In particular, the face feature which is present in the key frame may be compared with one or more face features that are associated with the one or more picture categories. If a match is made between the face feature which is present in the key frame and the one or more face features that are associated with the one or more picture categories, then the video can be assigned to the matched respective picture category or picture categories, such as is shown in step S105.
In step S105, the video is assigned to the picture category to which the video belongs.

With the method provided by the embodiments of the present invention, a video may be smartly and automatically classified into a picture category corresponding to a user appearing in the video, thereby eliminating the need for manual categorization by the user. In addition, as the categorization is conducted based on the face feature, its accuracy is improved.

In one embodiment, step S104 may be implemented as steps B1 to B3. In step B1, from the one or more picture categories which correspond to the one or more face features, a picture category matching the face feature in the key frame is determined. For example, the above-described steps A1 to A5 may be performed. Through face clustering, the picture category to which the key frame belongs is determined according to the face feature in the key frame. The picture category to which the key frame belongs is the picture category matching the face feature in the key frame. In step B2, the matching picture category determined in step B1 is determined as the picture category to which the video belongs.

In another embodiment, step S104 may be implemented as steps C1 to C3.

In step C1, when there are at least two videos, a face feature in a key frame in each of the videos is determined. In step C2, face clustering is performed for the at least two videos according to the face feature in the key frame in each of the videos, to obtain at least one video category, wherein one video category corresponding to one face. To be specific, at least one category may be obtained by performing face clustering for each key frame according to the face clustering method comprising the above-described steps A1 to A5. Here, a category is a video category, and thus each video category corresponds to a face feature; and a video category to which a key frame of a video belongs is a video category to which the video belongs. In step C3, according to a face feature corresponding to each respective one of the at least one video category and the one or more face features corresponding to the one or more picture categories, a picture category which corresponds to the same face feature as the respective one of the at least one video category is determined. Correspondingly, step S105 may be implemented as assigning each video in each respective one of the at least one video category to the picture category which corresponds to the same face feature as the respective one of the at least one video category. According to this implementation, video categorization is realized by first performing face clustering for videos to obtain video categories, then performing face clustering for the video categories and picture categories to determine, for each of the video categories, a picture category which corresponds to the same face feature as the video category, and next assigning each video in each video category to the picture category which corresponds to the same face as the video category.

In one embodiment, the above method may realize video categorization in the following manner where no face clustering is performed. Instead, it is coarsely considered that, as long as a video and a picture have the same capturing time and capturing location, the same person appears in the video and the picture, which therefore may be classified into the same category. In this manner, categorization can be done quickly with certain accuracy. As illustrated in Fig. 3, the above method may comprise steps S301 to S303. In step S301, a capturing time and a capturing location of the video are acquired. In step 302, a reference picture which has the same capturing time and the capturing location as the video is determined. In step S303, the video is assigned to a picture category to which the reference picture belongs.

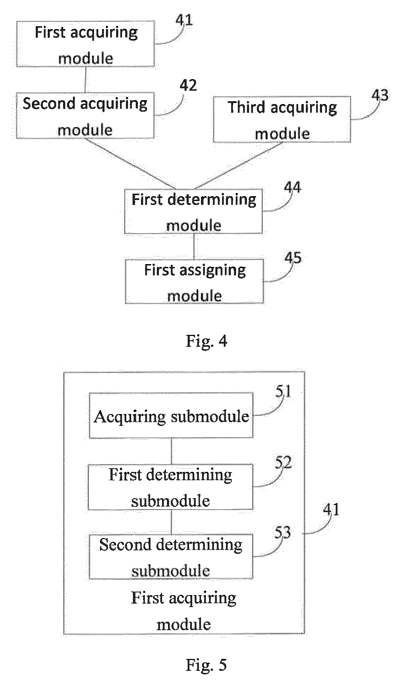

A second aspect of the embodiments of the present invention provides a video categorization apparatus. The apparatus may be used with an application program for managing multimedia files. In this case, the video, picture categories and pictures in the picture categories involved in the apparatus refer to the video, picture categories and pictures in the picture categories stored in a device where the application program is installed. In addition, the apparatus may also be applied to an electronic device where multimedia files are stored. In this case, the video, picture categories and pictures in the picture categories involved in the apparatus refer to the video, picture categories and pictures in the picture categories stored in the electronic device. The application program or the electronic device may trigger the apparatus to perform operations automatically on a periodic basis, upon receipt of a user's instruction, or automatically when it is detected that at least one new video is generated. There may be many choices of the timing for triggering the apparatus, including but not limited to the above described ones. By doing so, the ultimate goal is to smartly categorize the video and save manpower by using the method. As illustrated in Fig. 4, the apparatus comprises:
a first acquiring module 41 configured to acquire a key frame which contains a face in a video;
a second acquiring module 42 configured to acquire a face feature in the key frame acquired by the first acquiring module 41;
a third acquiring module 43 configured to acquire one or more face features corresponding to one or more picture categories;
a first determining module 44 configured to determine, according to the face feature in the key frame acquired by the second acquiring module 42 and the one or more face features corresponding to the one or more picture categories acquired by the third acquiring module 43, a picture category to which the video belongs; and
a first assigning module 45 configured to assign the video to the picture category, to which the video belongs, determined by the first determining module 41.

The above apparatus provided by the embodiment of the present invention enables a video to be smartly and automatically classified into a picture category corresponding to a user appearing in the video, thereby eliminating the need for manual categorization by the user. In addition, as the categorization is conducted based on the face feature, its accuracy is improved.

In an embodiment, referring to Fig. 5, the first acquiring module 41 comprises:
an acquiring submodule 51 configured to acquire from the video at least one video frame containing one or more faces;
a first determining submodule 52 configured to determine a face parameter for each of the at least one video frame acquired by the acquiring submodule 51, the face parameter comprising either or both of a face quantity and a face location; and
a second determining submodule 53 configured to determine the key frame in the video according to the face parameter for each of the at least one video frame.

In one embodiment, the second determining submodule 53 is further configured to determine, according to the face parameter for each of the at least one video frame, one or more non-duplicate video frames each having a face parameter that does not reoccur for other video frames and to determine at least one of the non-duplicate video frames as the key frame. To be specific, a non-duplicate video frame refers to a video frame which has a face parameter different from that of any other video frame, namely, which contains a face that does not reappear in another video frame. Therefore, any one or more non-duplicate video frames may be selected as key frames.

In one embodiment, the second determining submodule 53 is further configured to
determine, according to the face parameter for each of the at least one video frame, at least one group of duplicate video frames having the same face parameter, each group of duplicate video frames comprising at least two video frames, a difference between capturing times of a latest captured video frame and an earliest captured video frame in each group of duplicate video frames being less than or equal to a predetermined time duration, all the video frames in each group of duplicate video frames having the same face parameter; and
determine any one of each group of duplicate video frames as the key frame.

The predetermined time duration may be configured in advance. Since the same image in the video typically does not last for a long time, the predetermined time duration shall not be too long. Considering that the video is displayed at 24 frames per second, the predetermined time duration may be controlled to be within N/24 second, wherein N is greater than or equal to 1 and less than or equal to 24 (or 36, or another numerical value, which may be defined as needed). The shorter the predetermined time duration, the more accurate the selected key frame. Thus, video frames in each group of duplicate video frames contain the same face, i.e., the same face appears in the plurality of video frames. Therefore, any video frame in each group of duplicate video frames may be selected as a key frame, thereby eliminating the duplication and improving the efficiency of selecting the key frame.

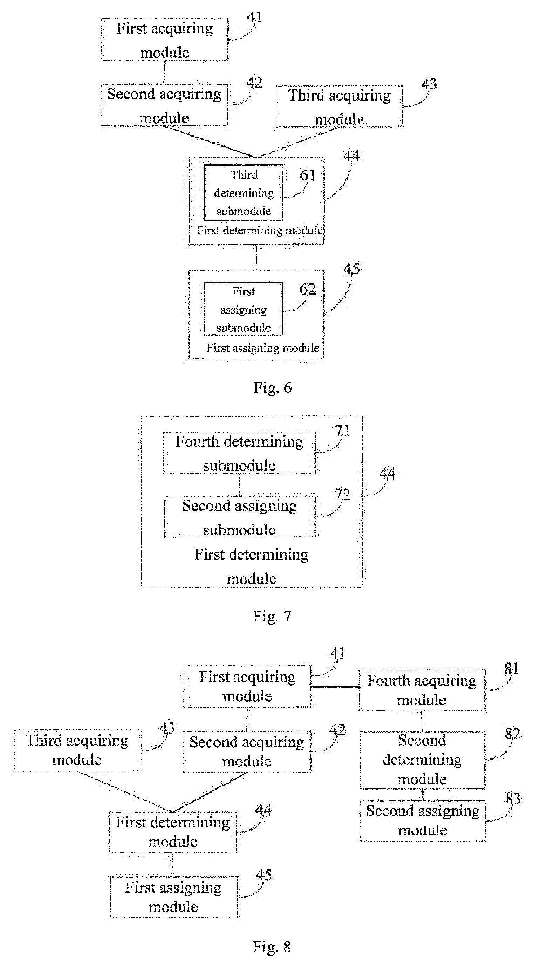

In an embodiment, referring to Fig. 6, the first determining module 44 comprises a third determining submodule 61.

The third determining submodule 61 is configured to: determine, when there are at least two videos, a face feature in a key frame in each of the videos; perform face clustering for the at least two videos according to the face feature in the key frame in each of the videos, to obtain at least one video category, wherein one video category corresponding to one face. To be specific, at least one category may be obtained by performing face clustering for each key frame according to the face clustering method comprising steps A1 to A5. Here, one category is one video category, and thus each video category corresponds to a face feature; and a video category to which a key frame of a video belongs is a video category to which the video belongs. The third determining submodule 61 is configured to determine, according to a face feature corresponding to each respective one of the at least one video category and the face features corresponding to the picture categories, a picture category which corresponds to the same face feature as the respective one of the at least one video category.

The first assigning module 45 comprises:
a first assigning submodule 62 configured to assign each video in each respective one of the at least one video category determined by the third determining submodule 61 to the picture category which corresponds to the same face feature as the respective one of the at least one video category.

The above apparatus realizes video categorization by first performing face clustering for videos to obtain video categories, then performing face clustering for the video categories and picture categories to determine, for each of the video categories, a picture category which corresponds to the same face as the video category, and next assigning the video in each video category to the picture category which corresponds to the same face as the video category.

In an embodiment, referring to Fig. 7, the first determining module 44 comprises:
a fourth determining submodule 77 configured to determine, from the one or more picture categories which correspond to the one or more face features, a picture category matching the face feature in the key frame; and
a second assigning submodule 72 configured to determine the matching picture category determined by the fourth determining submodule 71 as the picture category to which the video belongs.

In an embodiment, referring to Fig. 8, the apparatus further comprises:
a fourth acquiring module 81 configured to acquire a capturing time and a capturing location of the video;
a second determining module 82 configured to determine a reference picture which has the same capturing time and capturing location as those of the video acquired by the fourth acquiring module 81; and
a second assigning module 83 configured to assign the video to a picture category to which the reference picture the video determined by the second determining module 82 belongs.

The above apparatus needs no face clustering, but coarsely considers that, as long as a video and a picture have the same capturing time and capturing location, the same person appears in the video and the picture, which therefore may be classified into the same category. In this manner, categorization can be done quickly with certain accuracy.

According to a third aspect of embodiments of the present invention, a video categorization apparatus is provided. The apparatus comprises:
a processor; and
a memory for storing instructions executable by the processor,
wherein the processor is configured to:
acquire a key frame, which contains a face, in a video;
acquire a face feature in the key frame;
acquire one or more face features corresponding to one or more picture categories;
determine, according to the face feature in the key frame and the one or more face features corresponding to the one or more picture categories, a picture category to which the video belongs; and
assign the video to the picture category to which the video belongs.

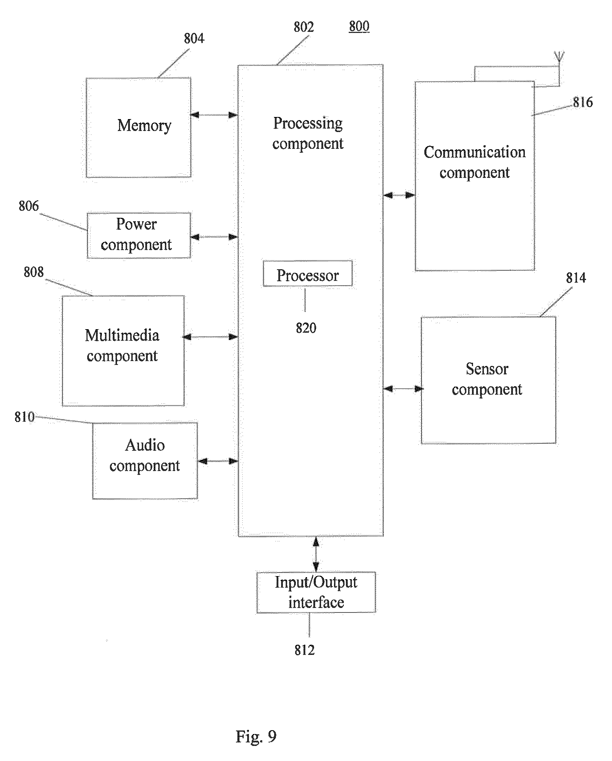

Fig. 9 is a block diagram illustrating an apparatus 800 for video categorization according to an exemplary embodiment of the present invention. For example, the apparatus 800 may be a mobile phone, a computer, a digital broadcast terminal, a messaging device, a gaming console, a tablet, a medical device, exercise equipment, a personal digital assistant, or the like.

Referring to Fig. 9, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or a part of the steps in the above-described methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the apparatus 800. Examples of such data include instructions for any application or method operated on the apparatus 800, contact data, phonebook data, messages, pictures, videos, and the like. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power supplies, and other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive external multimedia data when the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the apparatus 800 is in an operation mode, such as a call mode, a recording mode, or a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and a peripheral interface module, such as a keyboard, a click wheel, a button, or the like. The buttons may include, but are not limited to, a home button, a volume button, a starting button, and a locking button.

The sensor component 814 includes one or more sensors to provide status assessments of various aspects of the apparatus 800. For example, the sensor component 814 may detect an open/closed status of the apparatus 800, relative positioning of components, e.g., the display and the keypad, of the apparatus 800; and the sensor component 814 may further detect a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communications, wired or wirelessly, between the apparatus 800 and other devices. The apparatus 800 may access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium comprising instructions, such as included in the memory 804, executable by the processor 820 in the apparatus 800, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

A non-transitory computer-readable storage medium is provided. When executed by a processor of a mobile terminal, instructions stored in the storage medium cause the mobile terminal to perform a video categorization method, which comprises:
acquiring a key frame which contains a face in a video;
acquiring a face feature in the key frame;
acquiring one or more face features corresponding to one or more picture categories;
determining, according to the face feature in the key frame and the one or more face features corresponding to the one or more picture categories, a picture category to which the video belongs; and
assigning the video to the picture category to which the video belongs.

Other embodiments of the present invention will be apparent to those skilled in the art from consideration of the specification and practice of the embodiments disclosed herein. This application is intended to cover any variations, uses, or adaptations of the present invention following the general principles thereof and including such departures from the present invention as coming within common knowledge or customary technical means in the art. It is intended that the specification and embodiments be considered as exemplary only, with a true scope and spirit of the present invention being indicated by the appended claims.

It will be appreciated that the present invention is not limited to the exact construction that has been described above and illustrated in the accompanying drawings, and that various modifications and changes can be made without departing from the scope thereof. The scope of the present invention is only defined by the appended claims.

## Claims

1. A video categorization method, **characterized by** comprising:
acquiring a key frame from a video, the key frame containing at least one face;
acquiring a face feature from the key frame;
acquiring one or more face features corresponding to one or more picture categories;
determining, according to the face feature in the key frame and the one or more face features corresponding to the one or more picture categories, a picture category to which the video should be associated with; and
assigning the video to the picture category to which the video belongs.

2. The method according to claim 1, **characterized in that** the acquiring the key frame which contains a face in the video comprises:
acquiring, from the video, at least one video frame containing one or more faces;
determining a face parameter for each of the at least one video frame, the face parameter comprising either or both of a face quantity and a face location; and
determining the key frame in the video, according to the face parameter for each of the at least one video frame.

3. The method according to claim 2, **characterized in that** the determining the key frame in the video according to the face parameter for each of the at least one video frame comprises:
determining, according to the face parameter for each of the at least one video frame, one or more non-duplicate video frames each having a face parameter that does not reoccur for other video frames; and
determining at least one of the non-duplicate video frames as the key frame.

4. The method according to claim 2, **characterized in that** the determining the key frame in the video according to the face parameter for each of the at least one video frame comprises:
determining, according to the face parameter for each of the at least one video frame, at least one group of duplicate video frames having the same face parameter, each group of duplicate video frames comprising at least two video frames, a difference between capturing times of a latest captured video frame and an earliest captured video frame in each group of duplicate video frames being less than or equal to a predetermined time duration, all the video frames in each group of duplicate video frames having the same face parameter; and
determining any one of each group of duplicate video frames as the key frame.

5. The method according to any one of claims 1 to 4, **characterized in that**
the determining, according to the face feature in the key frame and the one or more face features corresponding to the one or more picture categories, the picture category to which the video belongs comprises:
when there are at least two videos, determining a face feature in a key frame in each of the videos;
performing face clustering for the at least two videos according to the face feature in the key frame in each of the videos, to obtain at least one video category; and
determining, according to a face feature corresponding to each respective one of the at least one video category and the one or more face features corresponding to the one or more picture categories, a picture category which corresponds to the same face feature as the respective one of the least one video category, and
the assigning the video to the picture category to which the video belongs comprises:
assigning each video in each respective one of the at least one video category to the picture category which corresponds to the same face feature as the respective one of the at least one video category.

6. The method according to any one of claims 1 to 5, **characterized in that** the determining, according to the face feature in the key frame and the one or more face features corresponding to the one or more picture categories, the picture category to which the video belongs comprises:
determining, from the one or more picture categories which correspond to the one or more face features, a picture category matching the face feature in the key frame; and
determining the matching picture category as the picture category to which the video belongs.

7. The method according to any one of claims 1 to 6, **characterized in that** the method further comprises:
acquiring a capturing time and a capturing location of the video;
determining a reference picture which has the same capturing time and capturing location as the video; and
assigning the video to a picture category to which the reference picture belongs.

8. A video categorization apparatus, **characterized by** comprising:
a first acquiring module configured to acquire a key frame from a video, the key frame containing at least one face;
a second acquiring module configured to acquire a face feature from the key frame acquired by the first acquiring module;
a third acquiring module configured to acquire one or more face features corresponding to one or more picture categories;
a first determining module configured to determine, according to the face feature in the key frame acquired by the second acquiring module and the one or more face features corresponding to the one or more picture categories acquired by the third acquiring module, a picture category to which the video should be associated with; and
a first assigning module configured to assign the video to said picture category determined by the first determining module.

9. The apparatus according to claim 8, **characterized in that** the first acquiring module comprises:
an acquiring submodule configured to acquire from the video at least one video frame containing one or more faces;
a first determining submodule configured to determine a face parameter for each of the at least one video frame acquired by the acquiring submodule, the face parameter comprising either or both of a face quantity and a face location; and
a second determining submodule configured to determine the key frame in the video according to the face parameter for each of the at least one video frame.

10. The apparatus according to claim 9, **characterized in that**
the second determining submodule is further configured to determine, according to the face parameter for each of the at least one video frame, one or more non-duplicate video frames each having a face parameter that does not reoccur for other video frames and to determine at least one of the one or more non-duplicate video frames as the key frame.

11. The apparatus according to claim 9, **characterized in that** the second determining submodule is further configured to
determine, according to the face parameter for each of the at least one video frame, at least one group of duplicate video frames having the same face parameter, each group of duplicate video frames comprising at least two video frames, a difference between capturing times of a latest captured video frame and an earliest captured video frame in each group of duplicate video frames being less than or equal to a predetermined time duration, all the video frames in each group of duplicate video frames having the same face parameter; and
determine any one of each group of duplicate video frames as the key frame.

12. The apparatus according to any one of claims 8 to 11, **characterized in that** the first determining module comprises a third determining submodule configured to:
determine, when there are at least two videos, a face feature in a key frame in each of the videos;
perform face clustering for the at least two videos according to the face feature in the key frame in each of the videos, to obtain at least one video category; and
determine, according to a face feature corresponding to each respective one of the at least one video category and the face features corresponding to the picture categories, a picture category which corresponds to the same face feature as the respective one of the at least one video category; and
the first assigning module comprises a first assigning submodule configured to assign each video in each respective one of the at least one video category determined by the third determining submodule to the picture category which corresponds to the same face feature as the respective one of the at least one video category.

13. The apparatus according to any one of claims 8 to 12, **characterized in that** the first determining module comprises:
a fourth determining submodule configured to determine, from the one or more picture categories which correspond to the one or more face features, a picture category matching the face feature in the key frame; and
a second assigning submodule configured to determine the matching picture category, determined by the fourth determining submodule as the picture category to which the video belongs.

14. A computer program including instructions for executing the steps of a video categorization method according to any one of claims 1 to 7, when said program is executed by a computer.

15. A recording medium readable by a computer and having recorded thereon a computer program including instructions for executing the steps of a video categorization method according to any one of claims 1 to 7.
